# EUROPEAN PATENT SPECIFICATION

(11) **EP 0 942 245 B1**
(45) Date of publication and mention of the grant of the patent: **25.09.2002**
(21) Application number: 99103100.6
(22) Date of filing: 17.02.1999
(51) Int. Cl.: F25D 23/02, F25D 23/08

(54) **Door for domestic refrigerators**
Tür für Haushaltskühlschränke
Porte pour réfrigérateur ménager

(30) Priority: 12.03.1998 IT VA980006 U
(43) Date of publication of application: 15.09.1999
(73) Proprietor: WHIRLPOOL CORPORATION, Benton Harbor Michigan 49022 (US)
(72) Inventor: Casoli, Fiorenzo, 21025 Comerio (IT); Pieretto, Davide, 21025 Comerio (IT); Villotti, Mario, 21025 Comerio (IT)
(74) Representative: Guerci, Alessandro

(56) References cited:
- EP-A- 0 249 299
- EP-A- 0 306 923
- DE-B- 1 213 871
- DE-U- 29 604 288
- DE-U- 29 804 303
- US-A- 4 583 796
- US-A- 5 002 625
- US-A- 5 533 311
- PATENT ABSTRACTS OF JAPAN vol. 016, no. 203 (M-1247), 14 May 1992 (1992-05-14) -& JP 04 031019 A (THREE BOND CO LTD), 3 February 1992 (1992-02-03)
- PATENT ABSTRACTS OF JAPAN vol. 009, no. 183 (M-400), 30 July 1985 (1985-07-30) -& JP 60 052322 A (THREE BOND KK), 25 March 1985 (1985-03-25)

## Description

The present invention relates to a door for domestic refrigerators, of the type comprising an outer plate, an inner plate or inner door, thermal insulation made of expanded polymeric material contained between the plates, and a gasket made of elastomeric material capable of co-operating with the edge of a cavity of the domestic refrigerator.

A door of this kind is shown by EP-A-0 249 299.

There are known doors for domestic refrigerators in which the gasket is constituted by an extruded member that is mechanically connected or bonded to the inner door. Solutions like this require the separate production of the plate and the gasket and their connection together, which therefore increases the production time of the door and also makes it necessary to manage a large stock of components for each door. Furthermore, with extruded gaskets, there is no guarantee of an optimal seal in the area of the comers of the door since, in those areas, the extruded gasket does not retain an optimal shape and, in the elastic compression phase, does not ensure sealing contact between the gasket itself and the edge of the refrigerator cavity.

The object of the present invention is to provide a door for domestic refrigerators that allows said drawbacks to be obviated in a simple and economic manner.

According to the invention, this object is achieved by the fact that the gasket made of elastomeric material is moulded by co-injection on one of said two plates.

The term co-injection refers to any type of injection moulding in which the polymeric material of the gasket is injected into the mould at the same time as or following the polymeric material of the plate, without however removing the latter from the mould.

Because of the aforementioned characteristics it is possible to reduce the cycle time necessary for producing the door, and the problem of a seal in the area of the corners, which affects doors provided with extruded-type gaskets, is eliminated with obvious advantages in economic and production terms and for energy saving. Thanks to the improved seal ensured by the gasket in the area of the comers there is a substantial reduction in the formation of ice inside the cavity, in the case where the door delimits a freezer compartment, thus reducing the frequency of defrosting by the user.

Preferably, the gasket is produced at the edge of the inner plate, and the latter preferably has an outer edge provided with a slot extending along the whole periphery of said plate, the gasket made of elastomeric material being co-injected so as to correspond with said slot in order to take on, in cross section, an arched shape substantially like a bridge.

Other advantages and characteristics of the door according to the invention will become obvious from the following detailed description, provided purely by way of non-exhaustive example, with reference to the attached drawings in which:

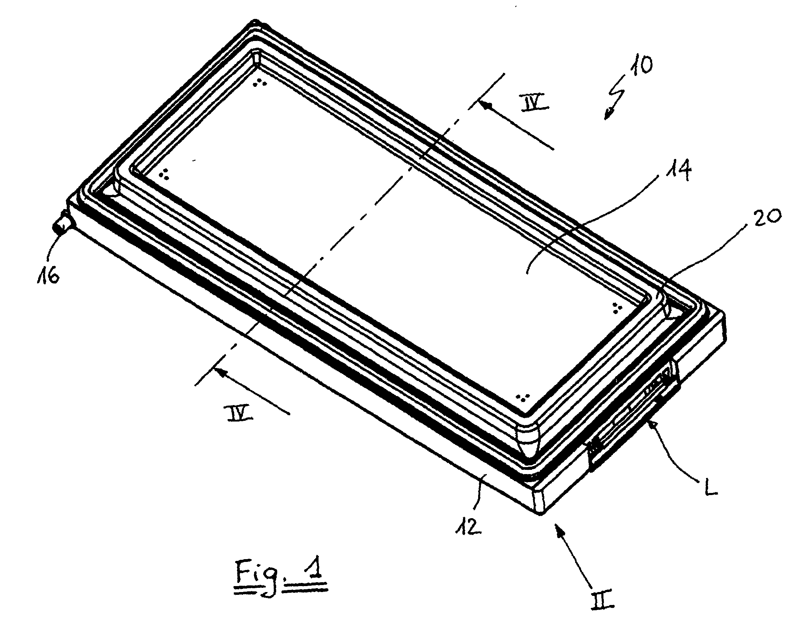

- Figure 1 is a perspective view of a door for refrigerators according to the invention,
- Figure 2 is an enlarged detail from Figure 1,
- Figure 3 is a similar view to Figure 2, in which a portion of the gasket has been removed,
- Figure 4 is a view in section along the line IV - IV in Figure 1,
- Figure 5 is an enlarged detail of a member in Figure 4, and
- Figure 6 is an enlarged detail from Figure 5, according to a variant embodiment.

With reference to the drawings the number 10 indicates, as a whole, a refrigerator door used for closing a freezer compartment (not illustrated). Although the door illustrated in the drawings can be applied as a closure for a freezer compartment inside the refrigerator, the door can obviously be of a different type, for example, the type used in refrigerators with two or more doors.

The door 10 comprises an outer shaped plate 12 and an inner shaped plate 14 made of polymeric material produced by injection moulding. The material used for the inner plate 14 is for example high-impact polystyrol (HIPS), polypropylene, high-density polyethylene, ethylene-propylene copolymer or acrylonitrile-butadiene-styrene copolymer (ABS). The outer plate 12, mechanically snap-fitted to the inner plate 14 by matching up the relative connection portions 14a, can be made of metal or polymeric material, and in the latter case with thermoforming or injection-moulding technology. The outer plate 12 is also provided with pivots 16 for hinging the door 10 to the refrigerator (not illustrated), as well as a release handle shown with the reference L.

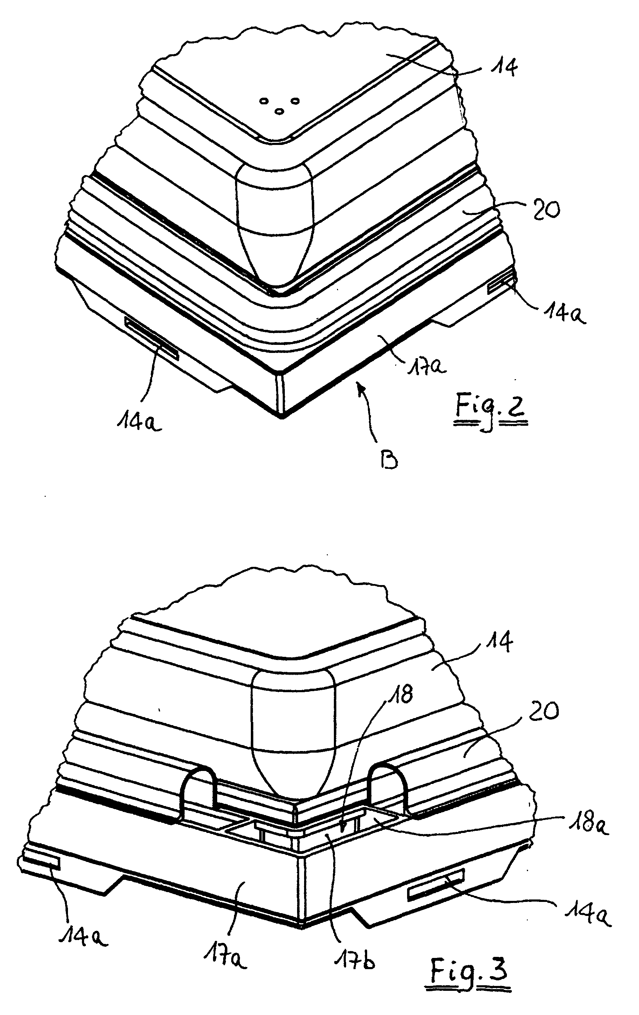

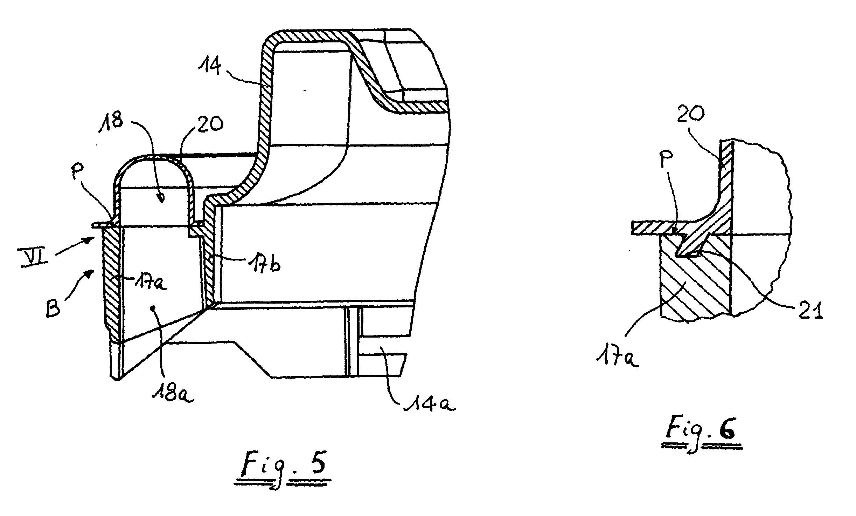

As can be seen clearly in Figures 3 - 5, the inner plate 14 has, in its peripheral area B, two peripheral portions 17a and 17b resembling frames, which extend perpendicular to the plane of the inner plate 14 and so as to delimit an annular slot 18. The peripheral portions 17a and 17b of the plate 14, outer and inner respectively, are connected by bridges 18a to ensure the continuity of the inner door. Matching the slot 18, a gasket made of elastomeric material 20 is co-injected on the inner plate 14 of the door 10, which bridge-like gasket connects the peripheral portions 17a and 17b that delimit the slot 18. The peripheral portions 17a and 17b have a plane front surface P on the part opposite the outer plate 12, which surface is sufficient to ensure good adhesion of the gasket 20 to the-material of the inner plate 14. To improve this adhesion, the material of the inner plate can be modified, in a manner known *per se*, in order to increase its compatibility with the material of the gasket 20. This gasket can be made from any elastomeric material capable of injection moulding, and is preferably a thermoplastic ethylene propylene rubber, for example an EPM or EPDM rubber, or a silicone rubber.

in the variant illustrated in Figure 6, to increase the anchorage of the gasket 20 to the inner plate 14, one or both of the edges of the slot 18 are provided with seats 21, preferably undercut, into which the elastomeric material penetrates at the time that the gasket 20 is injection-moulded.

To increase further the anchoring of the gasket 20 to the inner plate 14, the gasket 20 can extend along the outer surface of the outer peripheral portion 17a.

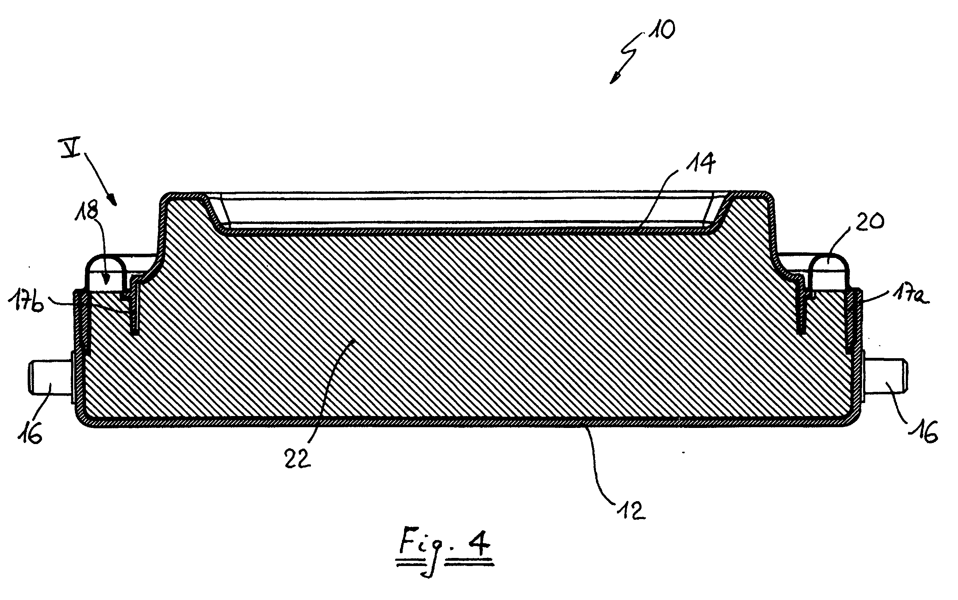

Between the two plates 12 and 14 a preformed insulating member 22 is interposed, made for example of expanded polystyrol, capable of providing thermal insulation for the door. The preformed member 22 is inserted before the mechanical snap-fitting of the two plates and, as can be seen in Figure 4, it comes substantially level with the slot 18, so as not to interfere with the elastic compression of the gasket 20.

From examining the drawings it is obvious how, according to the invention, in the area of the corners of the door, it is possible to maintain an optimal profile of the gasket 20 with all the advantages of an improved seal, in contrast with what could be achieved in the past with extruded-type gaskets.

## Claims

1. Door for domestic refrigerators comprising an outer plate (12), an inner plate (14), an insulating member (22) contained between said plates, and a gasket made of elastomeric material (20) capable of co-operating with the edge of a cavity of the domestic refrigerator, **characterised by** the fact that the gasket made of elastomeric material (20) is moulded by co-injection on one of said two plates (12, 14).

2. Door according to Claim 1, **characterised by** the fact that the gasket (20) is injected so as to correspond to the peripheral area (B) of the inner plate (14).

3. Door according to Claim 2, **characterised by** the fact that the inner plate (14) has a peripheral area (B) provided with a slot (18) extending along the whole periphery of said inner plate, said gasket (20) being injected so as to correspond with said slot in order to take on, in cross section, an arched shape substantially resembling a bridge.

4. Door according to Claim 3, **characterised by** the fact that at least one of the edges of said slot (18) has undercut seats (21) capable of ensuring mechanical-type connection between gasket (20) and inner plate (14).

5. Door according to Claim 3, **characterised by** the fact that the edges of said slot (18) have surface (P) such as to permit sufficient adhesion between the gasket (20) and the inner plate (14).

6. Door according to Claim 3, **characterised by** the fact that the slot (18) is delimited by two peripheral portions (17a, 17b) resembling frames, which extend perpendicular to the plane of the inner plate (14), said peripheral portions being connected by transverse portions (18a) resembling bridges.

7. Door according to any one of the preceding claims, **characterised by** the fact that the outer plate (12) and the inner plate (14) of the door (10) are fitted together by a snap fitting.

8. Door according to any one of the preceding claims, **characterised by** the fact that the inner plate (14) is made by injection moulding of a styrene or olefin polymer and by the fact that the material of the gasket is a thermoplastic ethylene propylene rubber or a silicone rubber.

## Patentansprüche

1. Tür für Haushaltskühlgeräte mit einer Außenplatte (12), einer Innenplatte (14), einem zwischen diesen Platten angeordneten Isolierglied (22) und einer Dichtung (20) aus Elastomermaterial, die mit der Kante einer Kammer des Haushaltskühlgeräts zusammenwirken kann,
**dadurch gekennzeichnet,**
**dass** die aus Elastomermaterial bestehende Dichtung (20) durch Koinjektion auf einer der beiden Platten (12, 14) gebildet ist.

2. Tür nach Anspruch 1,
**dadurch gekennzeichnet,**
**dass** die Dichtung (20) derart gespritzt ist, dass sie mit dem Umfangsbereich (B) der Innenplatte (14) übereinstimmt.

3. Tür nach Anspruch 2,
**dadurch gekennzeichnet,**
**dass** die Innenplatte (14) einen Umfangsbereich (B) hat, der mit einem längs des ganzen Umfangs der Innenplatte verlaufenden Schlitz (18) versehen ist, wobei diese Dichtung (20) derart aufgespritzt ist, dass sie mit diesem Schlitz übereinstimmt, um im Querschnitt eine gebogene, im Wesentlichen einer Brücke ähnelnde Form anzunehmen.

4. Tür nach Anspruch 3,
**dadurch gekennzeichnet,**
**dass** mindestens eine der Kanten des genannten Schlitzes (18) unterschnittene Sitze (21) aufweist, die eine mechanische Verbindung zwischen der Dichtung (20) und der Innenplatte (14) gewährleisten können.

5. Tür nach Anspruch 3,
**dadurch gekennzeichnet,**
**dass** die Kanten des genannten Schlitzes (18) eine derartige Oberfläche (P) aufweisen, dass eine genügende Haftung zwischen der Dichtung (20) und der Innenplatte (14) erreicht wird.

6. Tür nach Anspruch 3,
**dadurch gekennzeichnet,**
**dass** der Schlitz (18) durch zwei rahmenförmige Umfangsteile (17a, 17b) begrenzt ist, die senkrecht zur Ebene der Innenplatte (14) verlaufen und durch brückenförmige Querteile (18a) verbunden sind.

7. Tür nach einem der vorhergehenden Ansprüche,
**dadurch gekennzeichnet,**
**dass** die Außenplatte (12) und die Innenplatte (14) der Tür (10) durch eine Rastverbindung miteinander verbindbar sind.

8. Tür nach einem der vorhergehenden Ansprüche,
**dadurch gekennzeichnet,**
**dass** die Innenplatte (14) durch Spritzgießen eines Styren- oder Olefin-Polymers gefertigt ist und dass das Material der Dichtung (20) ein thermoplastischer Ethylen-Propylen-Gummi oder ein Silikon-Gummi ist.

## Revendications

1. Porte pour réfrigérateurs domestiques comprenant une plaque extérieure (12), une plaque intérieure (14), un élément isolant (22) logé entre lesdites plaques, et une garniture d'étanchéité formée par un matériau élastomère (20) apte à coopérer avec le bord d'une cavité du réfrigérateur domestique, **caractérisée en ce que** la garniture d'étanchéité formé d'un matériau élastomère (20) est moulé par co-injection sur l'une desdites deux plaques (12, 14).

2. Porte selon la revendication 1, **caractérisée en ce que** la garniture d'étanchéité (20) est injectée de manière à correspondre à la zone périphérique (B) de la plaque intérieure (14).

3. Porte selon la revendication 2, **caractérisée en ce que** la plaque intérieure (14) possède une zone périphérique (B) pourvue d'une fente (18) s'étendant le long de l'ensemble de la périphérie de ladite plaque intérieure, une garniture d'étanchéité (20) étant injectée de manière à posséder, en coupe transversale, une forme arquée ressemblant essentiellement à un pont.

4. Porte selon la revendication 3, **caractérisée en ce qu'**au moins l'un des bords de ladite fente (18) possède des parties en contre-dépouille (21) aptes à garantir une liaison de type mécanique avec une garniture d'étanchéité (20) et la plaque intérieure (14).

5. Porte selon la revendication 3, **caractérisée en ce que** les bords de ladite fente (18) possèdent une surface (P) apte à permettre une adhérence suffisante entre la garniture d'étanchéité (20) et la plaque intérieure (14).

6. Porte selon la revendication 3, **caractérisée en ce que** la fente (18) est délimitée par deux parties périphériques (17a, 17b) ressemblant à des cadres, qui s'étendent perpendiculairement au plan de la plaque intérieure (14), lesdites parties périphériques étant raccordées par des parties transversales (18a) ressemblant à des ponts.

7. Porte selon l'une quelconque des revendications précédentes, **caractérisée en ce que** la plaque extérieure (12) et la plaque intérieure (14) de la porte (10) sont montées l'une sur l'autre au moyen d'une fixation par encliquetage.

8. Porte selon l'une quelconque des revendications précédentes, **caractérisée en ce que** la plaque intérieure (14) est formée par moulage par injection d'un polymère de styrène ou d'oléfine et **en ce que** le matériau de la garniture d'étanchéité est un caoutchouc éthylène-propylène thermoplastique ou un caoutchouc silicone.
